# EUROPEAN PATENT APPLICATION

(11) **EP 3 987 897 A1**
(43) Date of publication of application: **27.04.2022**
(21) Application number: 21203892.1
(22) Date of filing: 21.10.2021
(51) Int. Cl.: A01B 59/06, A01B 71/06, A01B 63/02, A01B 51/04

(54) **UNIT FOR THE POSITIONING AND MOVEMENT OF OPERATING ELEMENTS**

(30) Priority: 22.10.2020 IT 202000024922
(71) Applicant: Da Ros Green S.r.l., 31010 Mareno di Piave TV (IT)
(72) Inventor: DA ROS, Lucio, 31010 MARENO DI PIAVE TV (IT)
(74) Representative: Modiano, Micaela Nadia

(57) **Abstract**

A unit (1) for the positioning and movement of operating elements (A, B), which comprises:
- at least one frame (2) provided with means (3) for coupling to a supporting structure of a vehicle (C),
- at least one apparatus for connecting a driven shaft which is integral with the frame (2) to a driving shaft of the vehicle (C), at a power take-off of said vehicle (C),
- at least one arm (4) which is pivoted rotatably with respect to the frame (2),
- at least one first actuator which is interposed between the frame (2) and the arm (4) for actuating the rotation of the arm (4) with respect to the frame (2), the first actuator being powered, directly or indirectly, by the driven shaft,
- at least one beam (5) coupled to the arm (4) and provided with a bracket (6) for coupling an operating element (A, B) which is powered, directly or indirectly, by the driven shaft,
- at least one second actuator which is interposed between the beam (5) and the arm (4) for actuating the translation of the beam (5) with respect to the arm (4), the second actuator being powered, directly or indirectly, by the driven shaft.

## Description

The present invention relates to a unit for the positioning and movement of operating elements, particularly indicated for installation on a farm tractor, an agricultural machine, an earth-movement vehicle, a heavy vehicle (of the type of a truck, a van, a pickup and the like) and/or a motor vehicle.

In the sectors of agriculture, gardening, and maintenance of civil engineering works and of architecture, the use is known of numerous operating elements that, installed on a vehicle, make it possible to carry out specific operations.

In particular, with reference to use in agriculture (and merely for the purposes of example), every tractor comprises connecting brackets for specific operating elements which are arranged, generally, at the front portion and/or at its rear portion.

In particular, farm tractors comprise power take-offs in these portions, which are nothing more than couplings that make it possible to connect a mechanical load to a shaft that can be associated with the driving shaft of the vehicle.

Through power take-offs, therefore, the tractor can supply the necessary energy for the operation of specific operating elements.

Among the most widespread types of operating elements are crop sprayers of phyto-pharmaceuticals, drills, diggers, apparatuses for removing foliage (known as defoliators), excavation tools, gripping elements (for example for pulling posts or plants from the ground), hedge trimmers and the like.

It should be noted that the number and the variety of operating elements on the market continues to grow, by virtue of the necessity/advisability to use automatic apparatuses to carry out as many operations as possible.

Often these operating elements are designed for specific uses and therefore do not have great versatility; as a consequence a user, in order to carry out similar operations under different operating conditions, finds themselves forced to acquire a plurality of different operating elements or needs to dismantle the operating element and modify its installation parameters in order to enable a different use thereof.

Such operations are expensive (by virtue of the purchase cost of the further operating elements and owing to the time needed to modify the installation parameters of every single operating element) and have major implications for the user.

In addition it also needs to be noted that many of these reconfiguration operations cannot be carried out on the field, since they necessitate suitable equipment for the temporary support and repositioning of the operating elements themselves (before remounting them on the tractor): this aspect is important because, for a farm vehicle, the area where it is to operate using the operating elements might be very far from the workshop (or in general from the environment used for shelter and maintenance) and therefore, in addition to the downtimes for transferring the tractor, account also needs to be taken of the corresponding fuel consumption (necessary to carry out such transfers).

The aim of the present invention is to solve the above mentioned drawbacks, by providing a unit for the positioning and movement of operating elements that is adapted to increase the versatility thereof.

Within this aim, an object of the invention is to provide a unit for the positioning and movement of operating elements that is adapted to ensure any modifications of the operating configurations without requiring the disassembly and reassembly of parts.

Another object of the invention is to provide a unit for the positioning and movement of operating elements of the automatic type.

Another object of the invention is to provide a unit for the positioning and movement of operating elements that can be associated with a plurality of different vehicles.

Another object of the invention is to provide a unit for the positioning and movement of operating elements that can be associated with a plurality of different operating elements.

Another object of the present invention is to provide a unit for the positioning and movement of operating elements which is low-cost, easily and practically implemented and safe in use.

This aim and these and other objects which will become more apparent hereinafter are achieved by a unit for the positioning and movement of operating elements, characterized in that it comprises:
- at least one frame provided with means for coupling to a supporting structure of a vehicle,
- at least one apparatus for connecting a driven shaft which is integral with said frame to a driving shaft of said vehicle, at a power take-off of said vehicle,
- at least one arm which is pivoted rotatably with respect to said frame,
- at least one first actuator which is interposed between said frame and said arm for actuating the rotation of said arm with respect to said frame, said first actuator being powered, directly or indirectly, by said driven shaft,
- at least one beam coupled to said arm and provided with a bracket for coupling an operating element which is powered, directly or indirectly, by said driven shaft,
- at least one second actuator which is interposed between said beam and said arm for actuating the translation of said beam with respect to said arm, said second actuator being powered, directly or indirectly, by said driven shaft.

Further characteristics and advantages of the invention will become more apparent from the detailed description that follows of a preferred, but not exclusive, embodiment of the unit for the positioning and movement of operating elements, which is illustrated by way of non-limiting example in the accompanying drawings wherein:

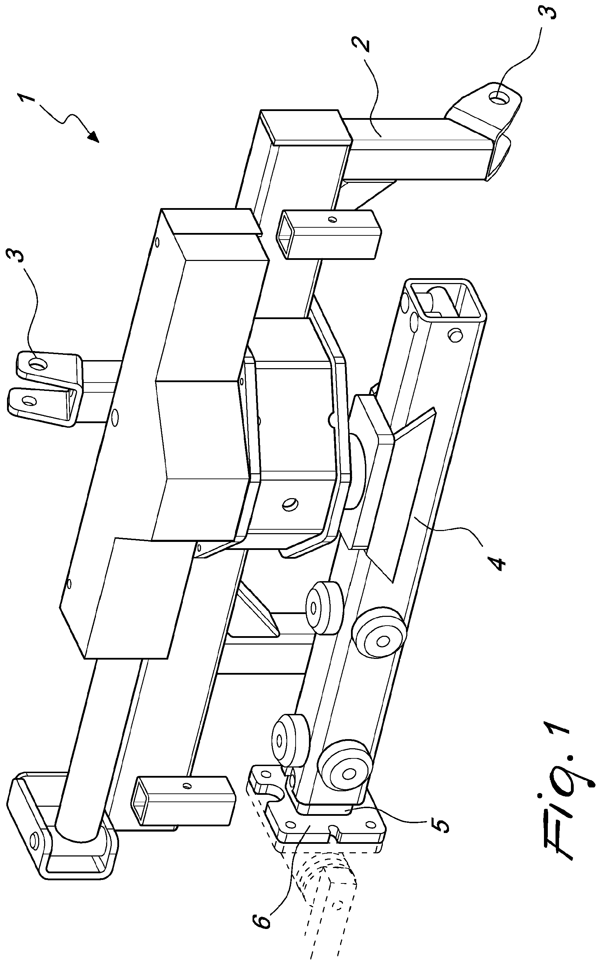

Figure 1 is a schematic perspective view of an embodiment of a unit for the positioning and movement of operating elements according to the invention;

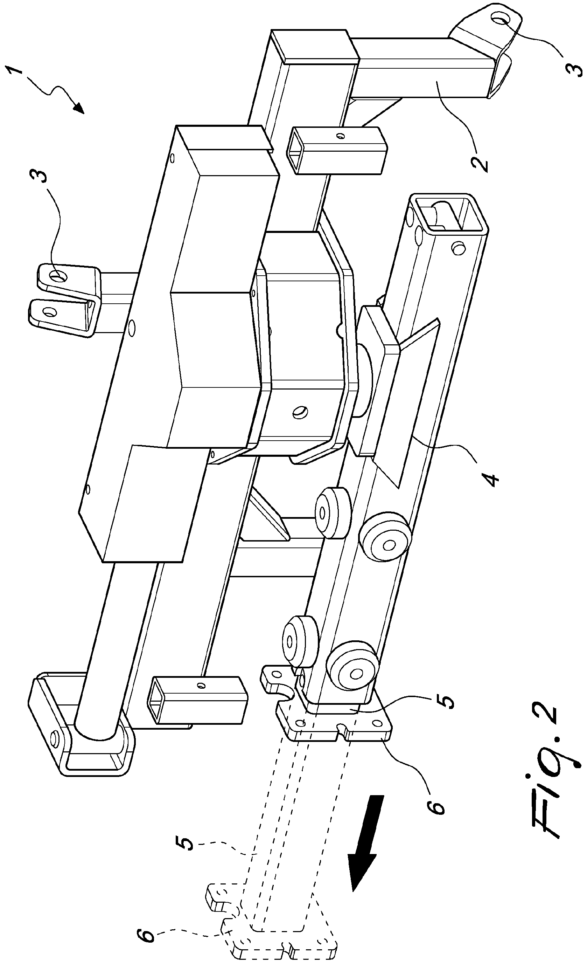

Figure 2 is a schematic perspective view of the unit of Figure 1 in the configuration of extension of the beam for supporting an operating element;

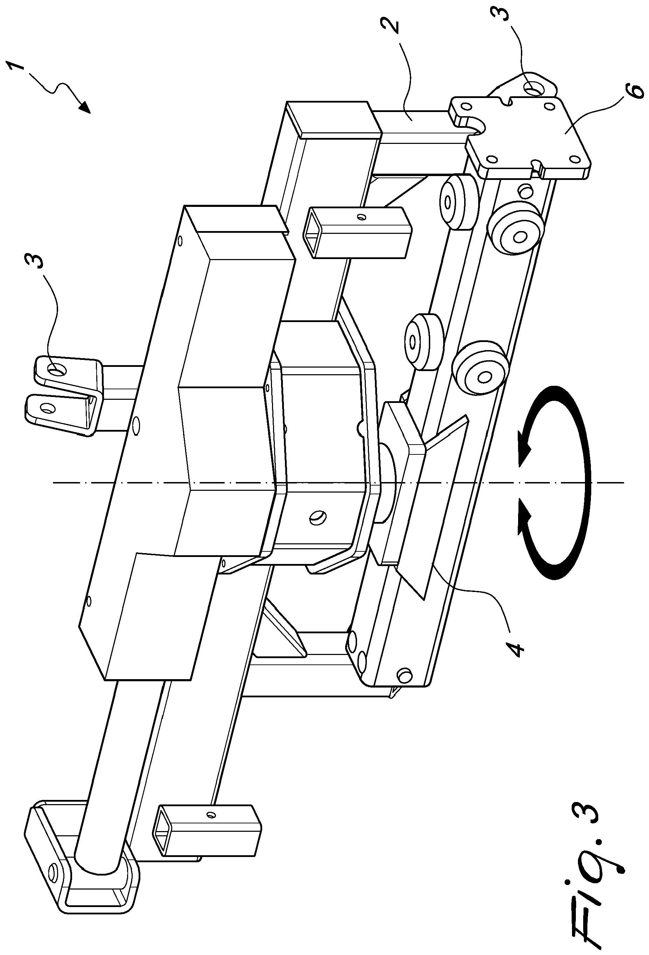

Figure 3 is a schematic perspective view of the unit of Figure 1 in the rotated configuration of the arm supporting the beam for supporting an operating element;

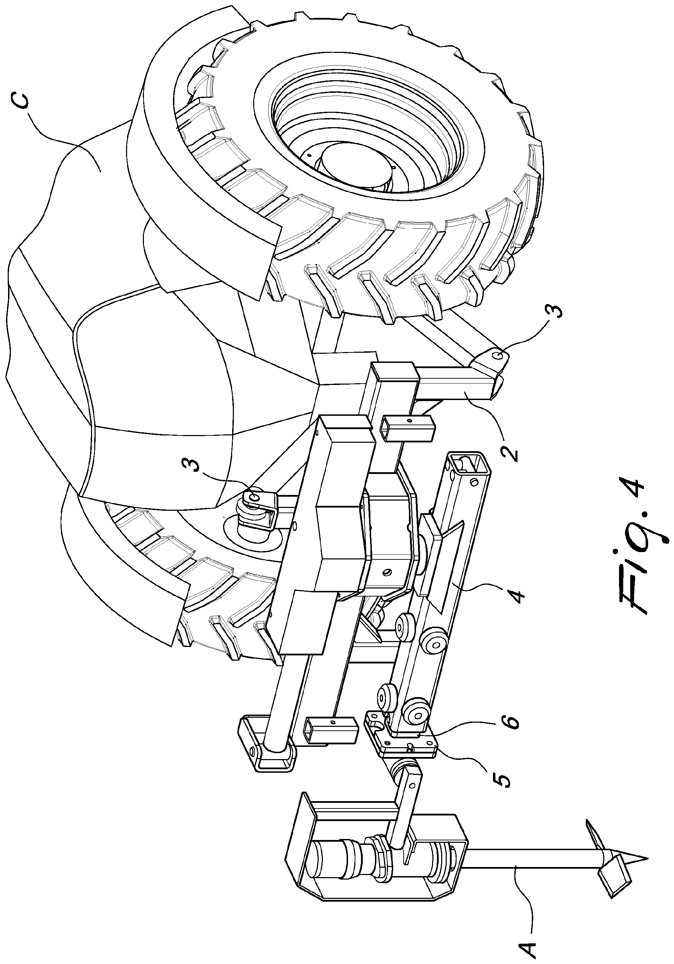

Figure 4 is a schematic perspective view of a possible installation of the unit of Figure 1 on a vehicle for supporting a first operating element;

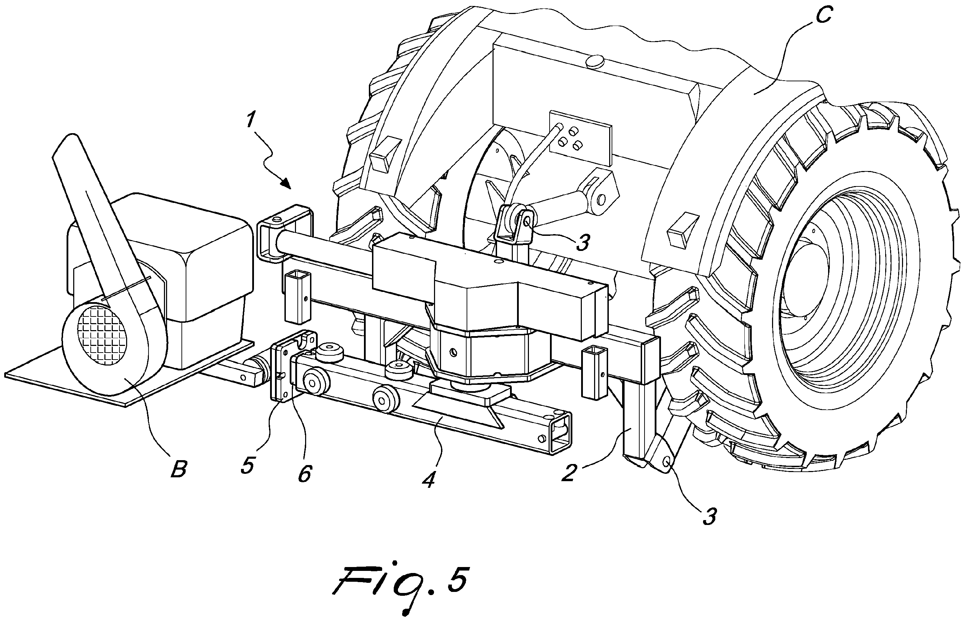

Figure 5 is a schematic perspective view of a possible installation of the unit of Figure 1 on a vehicle for supporting a second operating element.

With reference to the figures, the reference numeral 1 generally designates a unit for the positioning and movement of operating elements A and B.

The unit 1 according to the invention comprises at least one frame 2 provided with means 3 for coupling to a supporting structure of a vehicle C.

The vehicle C can be a tractor (for example a farm tractor), or means designed for moving earth, or a van, a pickup, a motor vehicle and the like.

The supporting structure of the vehicle C will be of the standardized type and, for example, can be chosen from among those currently already on the market for the direct connection of operating elements A and B.

The unit 1 according to the invention further comprises at least one apparatus for connecting a driven shaft which is integral with the frame 2 to a driving shaft of the vehicle C, at a power take-off of the vehicle C itself.

The connection apparatus can also be of the standardized type and, for example, can be chosen from among those currently already on the market for the direct connection of operating elements A and B to the "power take-off" of a vehicle C.

It should be noted that the frame 2 accommodates at least one arm 4, rotatably pivoted.

The at least one arm 4 has a substantially horizontal arrangement and can be pivoted to the frame 2 at any point of its entire longitudinal extension.

The arm 4 is dimensioned to be capable of supporting (in a cantilever fashion) very heavy loads, in relation the weight of the individual operating elements A and B that can be associated with it.

Obviously the frame 2 and the hinge interposed between the frame 2 and the arm 4 will be similarly dimensioned to tolerate very heavy loads as well (typical of the agricultural sector and of earth-moving machines).

In order to ensure a suitable mobility of the arm 4 with respect to the frame 2 (according to the degree of freedom of rotation allowed by the hinge through which the arm 4 is coupled to the frame 2), it should be noted that advantageously at least one first actuator can be interposed between the frame 2 and the arm 4 in order to actuate the rotation of the arm 4 with respect to the frame 2.

The first actuator will conveniently be powered, directly or indirectly, by the driven shaft mentioned previously.

In the accompanying figures, which are provided solely by way of non-limiting example, of a possible embodiment of the unit 1 according to the invention, the first actuator, the driving shaft and the driven shaft are not shown in detail, since these are components and structural architectures thereof that are consolidated in the sector and therefore deducible fully and immediately from the background art of the sector.

It should furthermore be noted that the unit 1 comprises, according to the invention, at least one beam 5 coupled to the arm 4 and provided with a bracket 6 for coupling an operating element A, B which is powered, directly or indirectly, by the driven shaft.

The bracket 6 will be of the standard type (that is to say, fitted with standardized means for coupling) so as to be easily coupled with all conventional operating elements A, B (or even elements developed in the future).

Essentially the bracket 6 will have means for coupling that correspond to those normally present in the supporting structure of the vehicle C.

The bracket 6 can also comprise components for facilitated centering, which are intended to promote the rapid coupling thereof to the operating element A, B that it is intended to mount.

It should furthermore be noted that there will also be at least one second actuator which is interposed between the beam 5 and the arm 4 for actuating the translation of the beam 5 with respect to the arm 4.

In this case too, the second actuator will be powered, directly or indirectly, by the driven shaft.

In practice therefore it has been seen that the unit 1 according to the invention is made to be interposed between the supporting structure of the vehicle C and the operating element A, B.

By virtue of the unit 1 according to the invention, the operating element A, B associated with the bracket 6 can be moved in space (oriented and shifted) according to the degree of freedom of rotation ensured by the hinge interposed between the frame 2 and the arm 4 and according to the degree of freedom of translation afforded by the sliding of the beam 6 with respect to the arm 4.

With particular reference to an embodiment of undoubted practical and applicative interest, the unit 1 can profitably comprise a hydraulic circuit provided with a driving pump dedicated to the driven shaft.

In this particular embodiment, the first actuator and the second actuator will both be of the hydraulic type and powered by the pump.

Respective hydraulic connectors (or hydraulic distributors) will enable the pump to also power the operating elements A, B that will be mounted on the bracket 6.

It should be noted that the arm 4 can profitably be rotatable, with respect to the frame 2 and in accordance with the degree of rotational freedom allowed by the respective coupling hinge, through an angle of no more than 360°. In a version that is particularly efficient and adapted to meet the operational requirements typical of the agriculture sector, of viticulture, fruit farming and horticulture, the arm 4 can rotate with respect to the frame 2 through a total angle of 180°, thus inverting its orientation and therefore making it possible to move the operating element A, B coupled to its bracket 6 to diametrically opposite positions.

Also with reference to particularly efficient embodiments, it should be noted that the arm 4 can conveniently have a guide for the sliding of the beam 4.

The first actuator, in such case, can positively be a device of the type preferably chosen from a cylinder (for example hydraulic, pneumatic, hydro-pneumatic and the like), a rack-and-pinion assembly dedicated to a respective motor/cylinder (for example hydraulic, pneumatic, electric and the like), a screw-and-nut mechanism dedicated to a respective motor (for example hydraulic, pneumatic, electric and the like), a pusher (for example hydraulic, pneumatic, electric and the like) and the like.

In particular it should be noted that the arm 4 can be hollow and accommodate the beam 5 internally according to a technique of collapsing which entails a telescopic coupling of the beam 5 in the arm 4.

The second actuator, in such case, can positively be a device of the type preferably chosen from a cylinder (for example hydraulic, pneumatic, hydro-pneumatic and the like), a rack-and-pinion assembly dedicated to a respective motor/cylinder (for example hydraulic, pneumatic, electric and the like), a screw-and-nut mechanism dedicated to a respective motor (for example hydraulic, pneumatic, electric and the like), a pusher (for example hydraulic, pneumatic, electric and the like) and the like.

Among electric pushers there are, by way of example, pushers that use a linear induction motor.

Among the possible types of operating elements that can be associated with the unit 1 according to the invention are drills A, grip clamps, crop sprayers B, defoliators, hedge trimmers and, in general, all the apparatuses that can be actuated by a vehicle C for the purpose of executing mechanical operations of various kinds, which may necessitate a specific orientation of the apparatus with respect to the vehicle C on which it is installed and an alignment thereof with the position for use (orientation and alignment made possible by the unit 1 according to the invention).

It should be noted that drills A are normally used to facilitate the operations of planting vines, trees, shrubs, bushes, but also for the installation of posts of any type.

Grip clamps on the other hand are used for operations to extract posts, stumps, plants and other elements fixed in the ground: basically using the clamp it is possible to grip the element to be extracted and proceed with a translation of the tightened clamp up until the complete extraction of the element.

Crop sprayers B are used for atomizing/spraying phyto-pharmaceuticals or other substances directly onto plants to be treated: a correct alignment with the plants ensures a better coverage of those plants with the dispensed substance.

Defoliators are used to remove some of the leaves from some plants (for example from a vine), taking particular care to remove only some of them (dead leaves or leaves about to dry out): obviously their correct alignment with the plants to be treated ensures a better result of the leaf removal operations.

Hedge trimmers make it possible to remove unwanted grass and bushes in a given area.

It should be noted that the unit according to the invention can advantageously comprise a hydraulic manifold from which respective hydraulic ducts branch out to supply the respective operating element A, B: the hydraulic manifold will conveniently be fed by the hydraulic pump illustrated previously.

With particular reference to an alternative embodiment, the unit 1 can profitably comprise an electrical circuit provided with a generator (for example an alternator or a direct current generator) dedicated to the driven shaft (on which the rotating shaft of the generator will be keyed).

In such case the first actuator and the second actuator will both be of the electric type, powered by the generator.

Among the possible variations of embodiment, it should be noted that a kinematic pair, provided with at least one third actuator for moving the bracket 6 with respect to the beam 4 according to the at least one degree of freedom allowed, can advantageously be interposed between the bracket 6 and the terminal end of the beam 4.

In this case too, the third actuator will be powered, directly or indirectly, by the driven shaft.

The object of the present discussion also extends to any vehicle C of the type adapted to support operating elements A, B which comprises at least one supporting structure for operating elements A, B and at least one unit 1 for the positioning and movement of the operating elements A, B themselves.

Such unit 1, in conformance with what has been comprehensively described previously, will comprise at least one frame 2 provided with means 3 for coupling to the supporting structure of the vehicle C, at least one apparatus for connecting a driven shaft which is integral with the frame 2 to a driving shaft of the vehicle C, at a power take-off of that vehicle C, at least one arm 4 which is pivoted rotatably with respect to the frame 2, at least one first actuator which is interposed between the frame 2 and the arm 4 for actuating the rotation of the arm 4 with respect to the frame 2 (the first actuator being powered, directly or indirectly, by the driven shaft), at least one beam 5 coupled to the arm 4 and provided with a bracket 6 for coupling the operating element A, B which is powered, directly or indirectly, by the driven shaft, and at least one second actuator which is interposed between the beam 5 and the arm 4 for actuating the translation of the beam 5 with respect to the arm 4 (the second actuator will be powered, directly or indirectly, by the driven shaft).

Thus it has been seen that the present invention also extends its protection to any vehicle C that already comprises a respective unit 1 (for example vehicles C that have been manufactured with such accessory incorporated as standard, or vehicles C that have been modified after their first registration through the permanent installation of a unit 1 according to the invention.

It should be noted that the vehicle C, in such case, will comprise at least one management and control unit for a power supply circuit of the first actuator and second actuator and of the operating element A, B.

Through at least one interface unit, which will be accessible and can be actuated by a user who is driving the vehicle C, it will be possible to control the movement of the unit 1 and manage the operation of the operating element A, B.

Advantageously the present invention solves the above mentioned problems, by providing a unit 1 for the positioning and movement of operating elements A, B that is adapted to increase the versatility thereof.

In fact such operating elements A, B, by virtue of the unit 1, can be actuated in different positions with respect to the vehicle C on which they are installed, thus facilitating their use in any possible working situation.

Conveniently, the unit 1 for positioning and movement is adapted to ensure any modifications of the operating configurations without requiring the disassembly and reassembly of parts. It has in fact been seen that the operator can shift and orient the operating element A, B simply by acting on the interface located inside the cabin of the vehicle C of installation, in a simple and intuitive manner, without the need for any stoppage to carry out format change operations.

Positively, the unit 1 for positioning and movement according to the invention is of the automatic type, in particular, hydraulic, pneumatic, hydro-pneumatic, electric and/or a combination thereof.

Advantageously the unit 1 for positioning and movement according to the invention can be associated with a plurality of different vehicles C.

Usefully the unit 1 for positioning and movement according to the invention can be associated with a plurality of mutually different operating elements A, B (in particular also with elements A and B that are already available to the operator for traditional use via direct mounting on the supporting structure of the vehicle C).

Positively the present invention illustrates a unit 1 for the positioning and movement of operating elements A, B that is easily and practically implemented and low-cost: such characteristics make the assembly 1 according to the invention an innovation that is certain to be safe in use.

The invention, thus conceived, is susceptible of numerous modifications and variations, all of which are within the scope of the appended claims. Moreover, all the details may be substituted by other, technically equivalent elements.

In the embodiments illustrated, individual characteristics shown in relation to specific examples may in reality be interchanged with other, different characteristics, existing in other embodiments.

In practice, the materials employed, as well as the contingent dimensions and shapes, may be any according to requirements and to the state of the art.

The disclosures in Italian Patent Application No. 102020000024922 from which this application claims priority are incorporated herein by reference.

Where the technical features mentioned in any claim are followed by reference numerals and/or signs, those reference numerals and/or signs have been included for the sole purpose of increasing the intelligibility of the claims and accordingly, such reference numerals and/or signs do not have any limiting effect on the interpretation of each element identified by way of example by such reference numerals and/or signs.

## Claims

1. A unit for the positioning and movement of operating elements (A, B), **characterized in that** it comprises:
- at least one frame (2) provided with means (3) for coupling to a supporting structure of a vehicle (C),
- at least one apparatus for connecting a driven shaft which is integral with said frame (2) to a driving shaft of said vehicle (C), at a power take-off of said vehicle (C),
- at least one arm (4) which is pivoted rotatably with respect to said frame (2),
- at least one first actuator which is interposed between said frame (2) and said arm (4) for actuating the rotation of said arm (4) with respect to said frame (2), said first actuator being powered, directly or indirectly, by said driven shaft,
- at least one beam (5) coupled to said arm (4) and provided with a bracket (6) for coupling an operating element (A, B) which is powered, directly or indirectly, by said driven shaft,
- at least one second actuator which is interposed between said beam (5) and said arm (4) for actuating the translation of said beam (5) with respect to said arm (4), said second actuator being powered, directly or indirectly, by said driven shaft.

2. The unit according to claim 1, **characterized in that** it comprises a hydraulic circuit provided with a driving pump dedicated to said driven shaft, said first actuator and said second actuator being both of the hydraulic type, powered by said pump.

3. The unit according to claim 1, **characterized in that** said arm (4) can rotate, with respect to said frame and in accordance with the degree of rotational freedom allowed by the respective coupling hinge, through an angle of no more than 360°.

4. The unit according to claim 1, **characterized in that** said arm (4) has a guide for the sliding of said beam (5), said second actuator being a device of a type preferably chosen from a cylinder, a rack-and-pinion assembly dedicated to a respective motor, a screw-and-nut mechanism dedicated to a respective motor, a pusher, and the like.

5. The unit according to claim 1, **characterized in that** said operating element (A, B) is of a type preferably chosen from a drill (A), a grip clamp, a crop sprayer (B), a defoliator, a hedge trimmer, and the like.

6. The unit according to claim 1, characterized that it comprises ducts for the hydraulic feeding of said operating element (A, B), which lead to a hydraulic manifold fed by said pump.

7. The unit according to claim 1 or 2, **characterized in that** it comprises an electrical circuit provided with a generator dedicated to said driven shaft, said first actuator and said second actuator being both of the electrical type, powered by said generator.

8. The unit according to one or more of the preceding claims, **characterized in that** a kinematic pair is interposed between said bracket (6) and the terminal end of said beam (5) and is provided with at least one third actuator for the movement of said bracket (6) with respect to said beam (5) according to the at least one degree of freedom allowed, said third actuator being powered, directly or indirectly, by said driven shaft.

9. A vehicle of the type suitable to support operating elements (A, B), **characterized in that** it comprises:
- at least one supporting structure for operating elements (A, B);
- at least one unit (1) for the positioning and movement of operating elements (A, B), which comprises:
- at least one frame (2) provided with means (3) for coupling to a supporting structure of a vehicle (C),
- at least one apparatus for connecting a driven shaft which is integral with said frame (2) to a driving shaft of said vehicle (C), at a power take-off of said vehicle (C),
- at least one arm (4) which is pivoted rotatably with respect to said frame (2),
- at least one first actuator which is interposed between said frame (2) and said arm (4) for actuating the rotation of said arm (4) with respect to said frame (2), said first actuator being powered, directly or indirectly, by said driven shaft,
- at least one beam (5) coupled to said arm (4) and provided with a bracket (6) for coupling an operating element (A, B) which is powered, directly or indirectly, by said driven shaft,
- at least one second actuator which is interposed between said beam (5) and said arm (4) for actuating the translation of said beam (5) with respect to said arm (4), said second actuator being powered, directly or indirectly, by said driven shaft.

10. The vehicle according to claim 9, **characterized in that** it comprises at least one management and control unit for a power supply circuit of said first actuator and said second actuator and of said operating element, at least one interface unit being accessible and able to be actuated by a user of said vehicle (C) for the movement of said unit (1) and the management of the operation of said operating element (A, B).
